# EUROPEAN PATENT SPECIFICATION

(11) **EP 3 213 469 B1**
(45) Date of publication and mention of the grant of the patent: **10.06.2020**
(21) Application number: 15854875.0
(22) Date of filing: 05.02.2015
(51) Int. Cl.: H04L 12/58

(54) **PROXIMITY BASED MESSAGING**
AUF PROXIMITÄT BASIERENDE NACHRICHTENÜBERMITTLUNG
MESSAGERIE BASÉE SUR LA PROXIMITÉ

(30) Priority: 28.10.2014 IN 5371CH2014
(43) Date of publication of application: 06.09.2017
(73) Proprietor: Hewlett-Packard Development Company, L.P., Spring TX 77389 (US)
(72) Inventor: MUTHUKRISHNAN, Rajesh, Bangalore 560103 (IN); GANESAN, Kumaravel, Bangalore 560103 (IN); BISWAL, Bibhu Prasad, Bangalore 560103 (IN)
(74) Representative: Haseltine Lake Kempner LLP
(86) International application number: PCT/US2015/014610
(87) International publication number: WO 2016/069042

(56) References cited:
- EP-A1- 2 677 706
- WO-A1-2014/171864
- US-A- 5 493 692
- US-A1- 2011 081 921
- US-A1- 2012 060 176
- US-A1- 2013 297 704
- US-A1- 2013 324 081
- US-A1- 2014 274 147
- US-A1- 2014 280 450
- US-B1- 8 352 546

## Description

### BACKGROUND

One or more individual users may subscribe to messaging services, which may generate messages intended for the respective user(s). The generation of such messages may be based on occurrence of predefined events, or may be based on a predefined period. The generated message may be subsequently provided to the user.
US 5493692 A discloses a method for selectively delivering electronic messages to an identified user or users in a system of mobile and fixed devices.

### BRIEF DESCRIPTION OF THE DRAWINGS

The following detailed description references the drawings, wherein:
FIG. 1 is a block diagram of an example system to provide messages to a user device, based on user device's proximity to an intended user;
FIG. 2 is a network environment implementing an example system to provide messages to a user device, based on user device's proximity to an intended user;
FIG. 3 is a block diagram of another example system to direct messages to a user device, based on user device's proximity to an intended user;
FIG. 4 is a flowchart of an example method for directing messages to a user device, based on user device's proximity to an intended user;
FIG. 5 is a flowchart of another example method for directing messages to a user device, based on user device's proximity to an intended user; and
FIG. 6 is a block diagram of an example system implementing a non-transitory computer-readable medium, to direct messages to a user device, based on user device's proximity to an intended user.

### DETAILED DESCRIPTION

The present invention is characterized by a messaging system as disclosed in claim 1, a messaging method as disclosed in claim 9 and a corresponding computer readable medium as disclosed in claim 13. Further additional aspects are disclosed in the accompanying dependent claims. Interactions between a user and their computing devices (referred to herein as "user devices") have increased steadily in the recent past. Such user devices may, for example, be used for receiving information or messages which may be either consumed or utilized by a user. In such scenarios, in order to receive messages pertinent to a specific user, a messaging service may be configured to provide relevant messages to a user device associated with the user. Once the message is provided to the user device, the user may pay heed to the message and may take an action in response to the received message. An example of such scenario includes, but is not limited to, an email account configured on a user device.

The messaging service may be associated with a system for performing specific functions. Based on occurrence of various events or based on input provided by a system administrator, the system may trigger the messaging service to generate one or more message for a specific user. On receiving the system trigger, the messaging service may generate the message, identify the user to which the message is to be sent, and transmits the message via an established communication channel. The message may subsequently be received by the user device of the user.

It may happen that, in some cases, the user device may not be in possession, or within close proximity to the user. In such a case, the message if delivered would be missed by the user. As a result, the user may not take appropriate action in response to the message in a timely way, if at all.

Examples described herein provide approaches for providing messages to one or more user devices of a user, based on user device's proximity to the user. For example, one or more user devices may be registered as associated with a user. In such examples, each of the user devices may include a proximity sensor to determine the physical proximity of the user to the device. In examples described herein, "physical proximity" (or "proximity") may be the physical distance between a user device and a user. In the present example, the proximity of the user to user devices may be determined based on proximity related information obtained from each of the user devices. In some examples, such proximity related information, indicating proximity of the user with user device(s), may be periodically determined for each device, and stored in a repository.

Messages for an intended user may be generated by a messaging service. The messaging service may identify the intended user based on predefined user profile. The generation of the messages may be based on occurrence of one or more events, or may occur on conformance with one or more predefined conditions. In yet another example, the generation of the messages may be initiated by another user.

As mentioned previously, the generated messages may be intended for specific users. The generated messages may also include identifiers indicating the identity of the user. The messages and the user identifiers may be acquired from the messaging service to identify the user to whom the message is to be provided. Upon identification of the intended user, proximity related information of the identified user is obtained and processed. For processing, the proximity related information may be analyzed to determine which user device isclosest to the intended user, after the message has been acquired from the messaging service. On identifying a user deviceas being closest, a communication channel is established with the identified user device. Once the communication channel is established, the message for the intended user may be provided to the identified user device closest to the intended user.

As would be understood, a messaging service may be associated with different types of systems affecting different functionalities. Continuing with the present subject matter, in another example, a proximity engine may periodically monitor and record the information related to proximity of a plurality of user devices with the user. During the course of monitoring the proximity related information, the proximity engine may detect generation of a message for a user. On detecting the generation of the message, the proximity engine may determine the user device which is closest to the user. Once the closest user device is identified, a message delivery engine may establish a communication channel to the identified user device and transmit the message accordingly.

In this manner, examples described herein may increase the likelihood that the messages intended for a user are received or read in a timely manner. As explained, the messages are provided to the user devices which are closest to the users, i.e., the messages are delivered to the user devices which are at the least physical distance from the user. It would also be understood, that with the messages being delivered to the closest user device, the user would be in a position to attend to the message and take the required actions. The proposed approaches may be utilized in different fields which involve generation and communication of messages to their intended users, ensuring that the message is not missed by the user. For example, the present subject matter may be implemented within an application server. The messaging service coupled to such an application server, may generate one or more message indicating diagnostic or system related information intended for a particular individual, such as a system administrator. In another example, the messaging service may be coupled to a server implementing a personal messaging platform. The messaging platform may be used for sharing messages between one or more users. For example, a sender may send an urgent message to a user. The server on receiving such an urgent message may determine the user device closest to the user. Once the closest user device is determined, a communication channel may be established with the user device for providing the urgent message to the user.

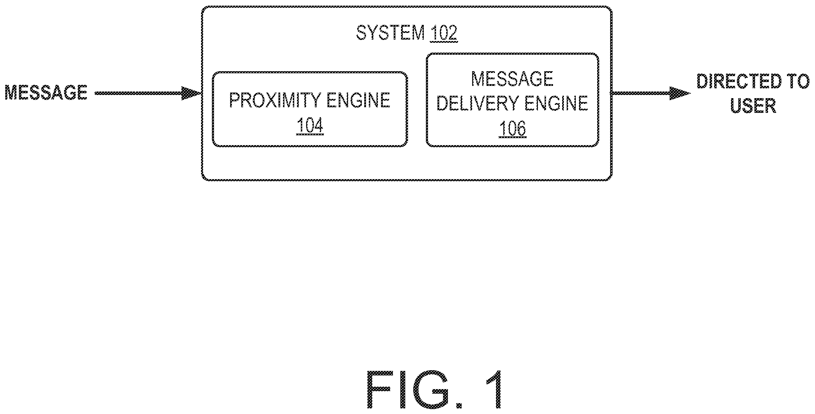

Examples are further described herein with reference to FIGS. 1-6. It should be noted that the description and figures relate to example implementations, and should not be construed as a limitation to the present subject matter. It is thus understood that various arrangements may be devised that, although not explicitly described or shown herein, embody the principles of the present subject matter. Moreover, all statements herein reciting principles, aspects, and embodiments of the present subject matter, as well as specific examples thereof, are intended to encompass equivalents thereof.

FIG. 1 provides a block diagram for an example system 102 to provide messages to a user device, based on the user device's proximity to a user. In the present example, the system 102 includes a proximity engine 104 and a message delivery engine 106. The proximity engine 104 may monitor and record proximity related information of the user at different instants of time. For example, the proximity engine 104 may obtain proximity related information after predefined time intervals. The proximity related information may be considered to indicate the relative physical distances between the multiple user devices and the user.

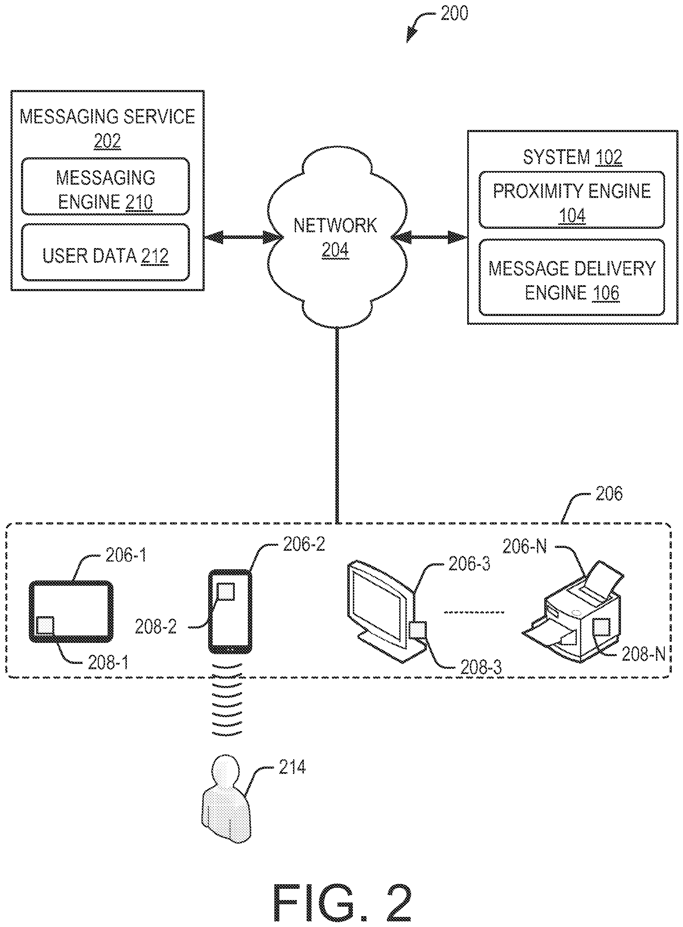

In operation, the system 102 acquires a message to be provided to a user. The message may be generated by a messaging service (not shown in FIG.1) intended for the user. Once the message from the messaging service has been acquired, the proximity engine 104 may determine the user device which is closest to the user. On determining the closest user device, the message delivery engine 106 may establish a communication channel to the user device, to transmit the message to the intended user. The manner in which the system 102 directs messages to a user device, based on user device's proximity to an intended user, is further described by way of examples, as provided in conjunction with FIG. 2.

FIG. 2 schematically illustrates a network environment 200 implementing the example system 102 which provides messages to a user device, based on user device's proximity to an intended user. The system 102 may be implemented as, but is not limited to, at least one server, workstation, computer, or the like. The system 102 may communicate with one or more different computing entities. For example, the system may communicate with a messaging service 202 over a communication network 204. The network 204 may include, for example, a local area network (LAN), a wireless local area network (WLAN), a virtual private network (VPN), the Internet, or the like, or a combination thereof. In some examples, a computer network may include a telephone network (e.g., a cellular telephone network).

The system 102 may further communicate with any one or more user devices 206-1, 2,..., n. Examples of such devices include computing devices, such as desktops, laptops, handheld computing devices, and printers. Each of the user devices 206-1, 2,..., n (collectively referred to as user devices 206) may each further include proximity sensor(s) 208-1, 2,..., n (collectively referred to as sensor(s) 208). The sensor(s) 208 may be either integrated within each of the user devices 206, or may be coupled to the user devices 206 through one or more suitable interfaces. In the present implementation, sensor(s) 208 may determine presence of one or more individuals within a range in the vicinity of the respective user devices 206. In operation, the sensor(s) 208 may be activated on detecting a presence of an individual in its vicinity. Furthermore, the sensor(s) 208 may additionally employ various recognition techniques for recognizing and determining the identity of the users in its proximity.

In operation, the sensor(s) 208 of the user devices 206 may periodically determine the presence and identity of the users within its vicinity, and in turn, in the vicinity of the user devices 206. Once a user in the vicinity is detected and its identity determined, information indicative of the proximity of the user devices 206 with the user is determined and communicated to the system 102. Example of sensor(s) 208 include, but are not limited to, motion detectors, occupancy sensors, proximity sensors, and the like.

The manner in which the physical distance between a user 214 and the user devices 206 may differ for different types of sensor(s) 208. For example, the sensor(s) 208 may be implemented as a proximity sensor. The sensor(s) 208 may use optical, capacitive, or other suitable sensing techniques. In the present example, the sensor(s) 208 may emit electromagnetic field or a beam of electromagnetic radiation (e.g., infrared). The emission of the electromagnetic field or beam of electromagnetic radiation may be persistent or may be periodic. In case the emission is configured to be periodic, the sensor(s) 208 may emit the radiations at predefined intervals of time (e.g., every 15 minutes). As would be understood, presence of an individual within the range of the emissions may result in the emitted radiations being reflected. The sensor(s) 208 may determine the direction from which the reflection occurred and may also determine the strength of the reflected signal. On determining the strength of the reflected signal, each of the user devices 206 may determine an estimated distance from the source of the reflection, i.e., the user 214. In one example, the user devices 206 may correlate the estimated distances based on an internally configured logic. The estimated distances may subsequently be communicated to the system 102 as proximity related information.

In another example, the sensor(s) 208 may be a capacitative sensor. Such types of sensors utilize the capacitance effect produced by a human body. The capacitative sensor(s) 208 may include an antenna. The antenna and the human body (when in proximity to the sensor(s) 208) serve as plates of a variable capacitor, with the human body (or portion thereof) being grounded and intermediate air being the dielectric. Since capacitance is a function of distance, the capacitance measured by the antenna would vary depending on the distance with the human body. The capacitance at the antenna may be measured, and accordingly the physical distance between each of the user devices 206 and the user 214, may be determined. Although the present example is provided in conjunction with electromagnetic radiation based or capacitance based sensor(s) 208, other example utilizing different types of sensors would also be within the scope of the present subject matter.

The system 102 subsequently may store the proximity related information. In one example, the proximity related information is determined by the sensor(s) 208, and stored by the system 102, periodically. The proximity related information may indicate the relative distances between the user devices 206 and the different users, obtained over various instants of time.

As mentioned previously, the system 102 may be in communication with the messaging service 202. As per an example, the messaging service 202 may be implemented by one or more networked computing devices for generating one or more messages for a plurality of users. The messaging service 202 may further include a messaging engine 210 and user data 212. The user data 212 may include data corresponding to the users, such as user 214. In another example, the user data 212 may further include one or more messaging rules associated with the data associated with the user. The messaging engine 210 may, in response to one or more messaging rules being satisfied, generate messages intended for a specified user, for example, user 214. The messages generated by the messaging engine 210 may be communicated to the system 102.

In operation, the messaging engine 210 may further generate amessageindication. The messaging engine 210 may subsequently communicate the message indication to the system 102. In one example, the message indication may include any identifier uniquely identifying the user, such as user 214, for whom the message is intended. Based on the message indication, the system 102 may determine the identity of the user, such as user 214, for whom the generated message is intended.

Once the messaging indication is received, the proximity engine 104 within the system 102 may obtain the proximity related information associated with the user 214. The proximity related information associated with the user 214 is obtained and processed. While processing the proximity related information, the proximity engine 104 may compare the relative distances between the user 214 and each of the user devices 206, based on the proximity related information.

The proximity engine 104 may determine one of the user devices 206, such as user device 206-2, to be closest to the user 214 at any instant after the message indication was received by the system 102. For example, the proximity engine 104 may compare the distances between each of the user devices 206 and the user 214. Based on the comparison, the proximity engine 104 may determine that the user device 206-2 is closest to the user 214. On determining the user device 206-2 to be the closest to the user 214, the message delivery engine 106 routes the message to the user device 206-2. For routing the message to the user device 206-2, the message delivery engine 106 may establish a communication channel over the network 204. Once the network 204 is established, the message delivery engine 106 communicates the message to the user device 206-2. In such a manner, the relevant messages would be routed to the relevant user device, thereby ensuring that the message is brought to the attention of the user, such as user 214.

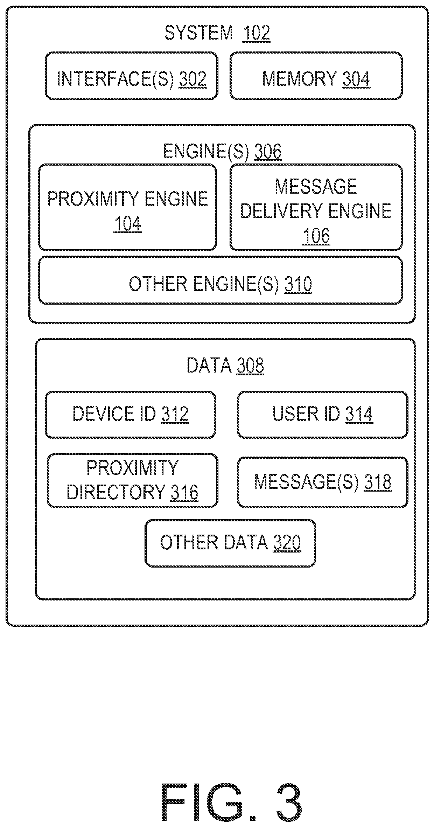

FIG. 3 illustrates an example system 102 to direct messages to a user device, based on user device's proximity to an intended user. The system 102 may be implemented as described above, for example. The system 102 includes interface(s) 302 and memory 304. The interface(s) 302 may include a variety of interfaces, for example, interfaces for data input and output devices, referred to as I/O devices, storage devices, network devices, and the like. The interface(s) 302 facilitate communication between the system 102 and various computing devices connected in the network environment 200, including, but not limited to, computing devices implementing the messaging service 202 and user devices 206.

The memory 304 may store one or more computer-readable instructions, which may be fetched and executed so as to cause to direct messages to a user device, based on user device's proximity to an intended user. The memory 304 may include any non-transitory computer-readable medium including, for example, volatile memory such as RAM, or non-volatile memory, such as EPROM, flash memory, and the like.

The system 102 may further include engine(s) 306 and data 308. The engine(s) 306 may be implemented as a combination of hardware and programming (e.g., programmable instructions) to implement one or more functionalities of the engine(s) 306. In examples described herein, such combinations of hardware and programming may be implemented in a number of different ways. For example, the programming for the engine(s) 306 may be processor executable instructions stored on a non-transitory machine-readable storage medium, and the hardware for the engine(s) 306 may include a processing resource (e.g., one or more processors), to execute such instructions. In the present examples, the machine-readable storage medium may store instructions that, when executed by the processing resource, implement engine(s) 306. In such examples, the system 102 may include the machine-readable storage medium storing the instructions and the processing resource to execute the instructions, or the machine-readable storage medium may be separate but accessible to system 102 and the processing resource. In other examples, engine(s) 306 may be implemented by electronic circuitry.

The data 308 includes data that is either predefined or generated as a result of the functionalities implemented by any of the engine(s) 306. In an example, the engine(s) 306 include the proximity engine 104, the message delivery engine 106 and other engine(s) 310. The other engine(s) 310 may implement functionalities that supplement applications or functions performed by the system 102. Further, the data 308 may include device ID 312, user ID 314, proximity directory 316, message(s) 318, and other data 320. The other data 320may include data generated and saved by the engine(s) 306 for implementing various functionalities of the system 102.

Any user, such as the user 214, may use a plurality of user devices, such as the user devices 206 for consuming content. Besides consuming content, the user 214 may attend to a variety of messages using such devices. It should be noted that the user devices 206 may not be owned by the user 214. Such user devices 206 may be devices which are otherwise accessible to the user 214.

For implementing the present subject matter, each of the user devices 206 is registered with one individual user, such as the user 214. For registering the user devices 206 with the user 214, the system 102 may obtain device information of each of the user devices 206 and the user information of the user 214. Within the system 102, such information may be stored as device ID 312 and user ID 314, respectively. Once obtained, the information stored as device ID 312 and the user ID 314, may be mapped to affect the association of the user 214 and each of the user devices 206. The registration may be initiated either by the user devices 206 or by the system 102. In one example, the system 102 may provide a link to each of the user devices 206. The user devices 206 may each access the link to register with the system 102.

Once the user devices 206 have been registered with the user 214, the system 102 may communicate an initiation signal to each of the user devices 206. On receiving the initiation signal, each of the user devices 206 may initiate the proximity monitoring processes. In one example, the initiation signal may activate one or more sensors, such as sensor(s) 208, within each of the respective user devices 206.

Each of the user devices 206, through the sensor(s) 208, may determine the proximity information of the user 214 with each of the user devices 206. The proximity information may include relative spatial distance between each of the user devices 206 and the user 214, at different instants of the time. On determining the proximity information, the respective user devices 206 each transmit the same to the system 102. On receiving the proximity information from each of the user devices 206, the proximity engine 104 maps the proximity information of each of the user devices 206 with the device ID 312 and the user ID 314. The mapping is maintained by the proximity engine 104 within proximity directory 316.

The proximity directory 316 may be considered as a repository storing proximity related information of each of the user devices 206 with respect to an individual user, such as user 214. In one example, the proximity related information may specify a relative spatial separation between each of the user devices 206 and the user 214, at any given instant of time. In one example, the proximity directory 316 may indicate the distances by a proximity value instead of the actual distance. The proximity value may be obtained by normalizing the distances recorded for each of the user devices 206. In one example, the proximity directory 316 may be implemented as relational database. An example mapping of the proximity related information, the device ID 312 and user ID 314, is depicted in Table 1, as provided below:

**Table 1**

| **User ID** | **Device ID** | **Proximity Value** |
|---|---|---|
| John | deviceID 1 (206-1) | 4 |
| | deviceID 2 (206-2) | 2 |
| | deviceID 3 (206-3) | 6 |
| | deviceID n (206-n) | 3 |

As per the above example for the proximity directory 316, it can be gathered that the user device 206-2 is determined to be in closest proximity to the user 214.

While monitoring the proximity related information for each of the user devices 206, the system 102 may receive a message indication from a messaging service, such as the messaging service 202. The message indication may be indicative of one or more message which may have been generated for an individual user. The message indication may further indicate the identity of the user for which the one or more messages have been generated. For example, the message indication may further include the user ID of the user, such as the user 214, for whom the one or more messages have been generated. In another example, the messaging service 202 may further transmit the message to the system 102, which may be subsequently stored as message(s) 318. In yet another example, the message indication may also be stored in message(s) 318.

The proximity engine 104 on receiving the message indication, may determine the user device from amongst the user devices 206, which is in closest proximity to the user, i.e., user 214. In the present example, the proximity engine 104 may compare the proximity values (as indicated in Table 1) for each of the user devices 206. Considering the example provided in Table 1, the proximity engine 104 may determine the user device 206-2 to be closest to the user 214.

On concluding the user device 206-2 to be the closest to the user 214, the message delivery engine 106 may further establish a communication channel with the identified user device 206-2. The communication channel may be established over the network 204, or may be established as part of another communication network, independent of the network 204. In one example, the communication channel may be based on extensible Messaging and Presence Protocol (XMPP).

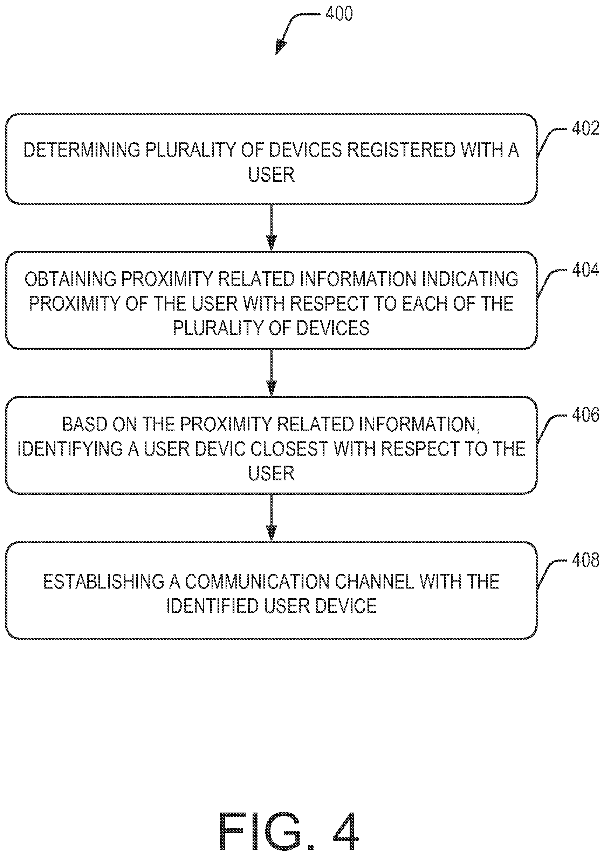

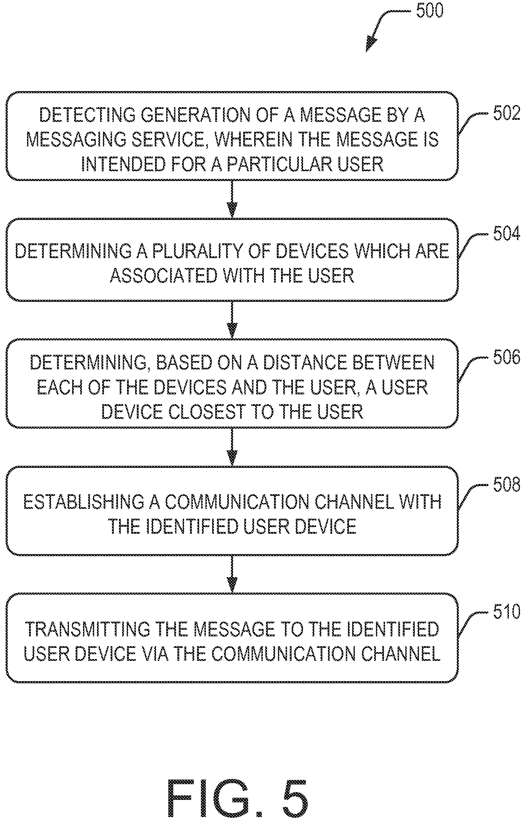

FIGS. 4 and 5 illustrate example methods 400 and 500, respectively, to direct messages to a user device, based on user device's proximity to an intended user, according to an implementation of the present subject matter. The order in which the methods are described is not intended to be construed as a limitation, and any number of the described method blocks may be combined in any order to implement the aforementioned methods, or an alternative method. Furthermore, methods 400 and 500 may be implemented by processing resource or computing device(s) through any suitable hardware, non-transitory machine readable instructions, or combination thereof.

It may also be understood that methods 400 and 500 may be performed by programmed computing devices, such as system 102 as depicted in FIGS. 1-3. Furthermore, the methods 400 and 500 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media.

Further, the methods 400 and 500 are described below with reference to system 102 as described above, other suitable systems for the execution of these methods can be utilized. Additionally, implementation of these methods is not limited to such examples.

Referring to FIG. 4, at block 402, plurality of devices associated with an individual user are identified. For example, a plurality of user devices 206 may be registered with a user 214. It may be the case that the user 214 is in possession of multiple devices. For registering, device related information may be obtained from each of the user devices 206. The device information may include one or more device identifiers and information indicating whether the device would be capable of rendering any message.

At block 404, proximity related information for each of the plurality of devices is obtained. For example, each of the user devices 206 may be provided with one or more sensor(s) 208. The sensor(s) 208 may determine the presence and identity of an individual within a range in the vicinity of the respective user devices 206. Once the individual, such user 214, has been identified, the respective user devices 206 may determine its distance with respect to the user 214. The distance between the respective user devices 206 and the user 214 may be determined based on strength of the signal reflected back from the body of the user 214. The between each of the user devices 206 and the user 214, is obtained by the system 102 and stored in a proximity directory 316.

At block 406, a user device which is closest to the user is identified based on the proximity related information. For example, the proximity engine 104 may analyze the proximity related information corresponding to each of the user devices 206, from the stored proximity directory 316 to determine the user device 206-2 as the closest to the user 214.

At block 408, a communication channel is established with the identified user device. For example, once the user device 206-2 is identified to be in the closest proximity of the user 214, the message delivery engine 106 may establish a communication channel between the system 102 and the user device 206-2. Once the communication channel is established, the message delivery engine 106 may transmit one or more messages intended for the user 214 to the user device 206-2. In one example, the communication channel may be based on an extensible Messaging and Presence Protocol (XMPP).

FIG. 5 provides another example method 500 to direct messages to a user device, based on user device's proximity to an intended user. At block 502, generation of one or more messages intended for an individual user is detected. In one example, the generated messages may be acquired by the system 102. As described previously, the messages may be generated by a messaging service 202. The messages generated by the messaging service 202 may be generated based on predefined conditions or may be initiated by a system administrator. Furthermore, the generated messages may be based on user data 212 stored with the messaging service 202.

The messaging service 202, while generating the required messages, may further generate a message indication. The message indication, besides indicating the generation of message, may further identify the identity of the user for whom the message is intended. The message indication generated by the messaging service 202 is communicated to the system 102. In one example, the messages and the message indication is stored in message(s) 318.

At block 504, a plurality of user devices associated with an individual user are identified. For example, any user, such as user 214, may be associated with a plurality of user devices 206. The proximity engine 104 may initially determine the user, such as user 214, to whom the message(s) 318 are intended based on the message indication. Once the user 214 is identified, the user devices 206 associated with the user 214 are determined. In the present example, the proximity engine 104 may determine the user devices 206 based on the device ID 312 and the user ID 314.

At block 506, a user device closest to the user is identified on acquiring . For example, the proximity engine 104 may determine a user device, such as user device 206-2, from amongst the user devices 206. In one example, the proximity engine 104 may analyze the proximity directory 316 to determine the relative distances between each of the user devices 206 and the user 214. Based on the relative distances, the proximity engine 104 may identify the user device 206-2 as the device which is closest to the user 214.

At block 508, once identified, a communication channel is established with the identified user device which is closest to the user. For example, once the proximity engine 104 has identified the closest user device, i.e., the user device 206-2, the message delivery engine 106 establishes a communication channel between the system 102 and the user device 206-2. The communication channel may be established over any communication network, such as the network 204 (illustrated in FIG. 2). In one example, the communication channel is established based on extensible Messaging and Presence Protocol (XMPP). It should be noted that the communication channel may also be implemented through any other protocol, without deviating from the scope of the present subject matter. Once the communication channel is established, the message(s) 318 may be transmitted to the closest device, e.g., the user device 206-2 (block 510).

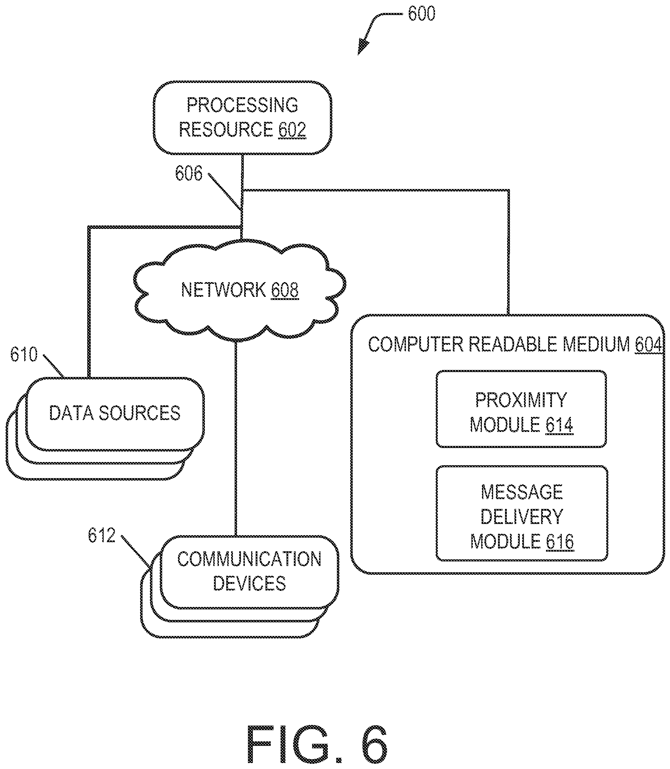

FIG. 6 illustrates a system environment 600 to direct messages to a user device, according to an example of the present disclosure. The system environment 600 may comprise at least a portion of a public networking environment or a private networking environment, or a combination thereof. In one implementation, the system environment 600 includes a processing resource 602 communicatively coupled to a computer readable medium 604 through a communication link 606.

For example, the processing resource 602 can include one or more processors of a computing device for direct messages to a user device. The computer readable medium 604 can be, for example, an internal memory device of the computing device or an external memory device. In one implementation, the communication link 606 may be a direct communication link, such as any memory read/write interface. In another implementation, the communication link 606 may be an indirect communication link, such as a network interface. In such a case, the processing resource 602 can access the computer readable medium 604 through a network 608. The network 608 may be a single network or a combination of multiple networks and may use a variety of different communication protocols.

The processing resource 602 and the computer readable medium 604 may also be coupled to data sources 610 through the communication link 606, and/or to communication devices 612 over the network 608. The coupling with the data sources 610 enables in receiving the data in an offline environment, and the coupling with the communication devices 612 enables in receiving the data in an online environment.

In one implementation, the computer readable medium 604 includes a set of computer readable instructions, implementing a proximity module 614 and message delivery module 616. The set of computer readable instructions can be accessed by the processing resource 602 through the communication link 606 and subsequently executed to process data communicated with the data sources 610 in order to direct messages to a user device, based on user device's proximity to an intended user. When executed by processing resource 602, the instructions of proximity module 614 may perform the functionalities described above in relation to proximity engine 104. When executed by processing resource 602, the instructions of message delivery module 616 may perform the functionalities described above in relation to message delivery engine 106.

As per the present example, each of the user devices 206 is associated with the user 214. On execution, the proximity module 614 may affect the monitoring and recording of the proximity related information of the user 214 at periodic time intervals. The proximity related information may be considered to indicate the relative distances between the multiple user devices 206 and the user 214. In operation, a message generated by a messaging service, such as messaging service 202, may be acquired, for example from the messaging service 202. In another example, the message may also indicate the user, such as user 214, for whom the message is intended.

On acquiring the message from the messaging service 202, the proximity module 614 may initially determine the user, such as user 214, for whom the message is intended. The user 214 may be based on the user identity information accompanying the message. Once the user 214 has been identified, the proximity module 614 may further identify a plurality of user devices 206 which may be associated with the user 214. The user devices 206, which may be associated with the user 214, may be determined by the proximity module 614 based on proximity directory 316.

The proximity module 614 may further analyze the proximity directory 316 to determine which device, amongst the user devices 206, is closest to the user 214 after the message was acquired. For example, the proximity module 614 may analyze the proximity directory 316 to compare the proximity value of each of the user devices 206. Based on the comparison, the proximity module 614 may conclude one of the devices, such as user device 206-2, to be closest to the user 214.

On determining the user device 206-2 to be closest to the user 214, the message delivery module 616 may be executed to establish a communication channel with the user device 206-2. On establishing the communication channel with the user device 206-2, the message delivery module 616 obtains and transmits the message to the identified user device 206-2, over the communication channel.

## Claims

1. A messaging system (102) comprising:
a proximity engine (104) adapted to,
determine proximity of a user with respect to each of a plurality of user devices associated with the user;
further determine which of the plurality of user devices is in closest proximity with the user among the plurality of user devices; and
a message delivery engine (106) to provide a message to the user device determined to be in the closest proximity to the user, wherein the proximity engine is further adapted to:
obtain proximity values, indicated by a proximity directory (316), corresponding to each of the devices associated with the user from a mapping between the user and each of the devices;
iteratively compare the proximity value of each of the devices to determine the least proximity value; and
identify one of the devices associated with the least proximity value as the device being in closest proximity to the user.

2. The system as claimed in claim 1, wherein the proximity engine (104) is to determine proximity of the user, in response to receiving an indication of the generation of the message.

3. The system as claimed in claim 1, the system further comprises a proximity registry to receive and store proximity information indicating physical proximity of the user with respect to each of the plurality of user devices, wherein the proximity information is obtained periodically.

4. The system as claimed in claim 3, wherein the proximity engine (104) is to analyze the proximity information to determine the user device in closest proximity to the user.

5. The system as claimed in claim 1, wherein the proximity engine (104) is to associate the plurality of the user devices with the user by mapping user device identifications of each of the plurality of user devices with a user identification of the user.

6. The system as claimed in claim 1, wherein the proximity engine (104) is to receive user credentials for authenticating and identifying the user.

7. The system as claimed in claim 1, wherein the message delivery engine (106) is to,
establish a communication channel with the user device in closest proximity to the user; and
provide the message over the communication channel.

8. The system as claimed in claim 7, wherein the communication channel is based on an extensible Messaging and Presence Protocol (XMPP).

9. A messaging method comprising:
in response acquiring a message to be provided to a user, determining a plurality of devices registered as associated with the user;
obtaining proximity information indicating, for each of the devices associated with the user, physical proximity of the user to the device;
based on the proximity information, identifying one amongst the plurality of associated devices being in closest proximity to the user;
establishing a communication channel with the identified device; and
provide the acquired message to the identified device over the communication channel, wherein the identifying further comprises:
obtaining proximity values, indicated by a proximity directory (316), corresponding to each of the devices associated with the user from a mapping between the user and each of the devices;
iteratively comparing the proximity value of each of the devices to determine the least proximity value; and
identifying one of the device associated with the least proximity value as the device being in closest proximity to the user.

10. The method as claimed in claim 9, wherein the message is acquired from a messaging service, the message being generated based on one of a profile data and subscription data associated with the user.

11. The method as claimed in claim 9, wherein user within the physical proximity of the user device is identified based on one of user credentials and biometric input received from the user.

12. The method as claimed in claim 9, wherein the acquired message is provided exclusively to the identified device.

13. A non-transitory computer-readable medium comprising instructions executable by a processing carry out all the steps of a method as in claim 9.

14. The computer-readable medium of claim 13, wherein the proximity values are obtained from a proximity registry, with the proximity registry including a mapping between,
the proximity values with a device identification of each of the plurality of devices; and
a user identification associated with the user.

## Patentansprüche

1. Nachrichtenübermittlungssystem (102), Folgendes umfassend:
eine Nähemaschine (104), die dafür ausgelegt ist,
die Nähe eines Benutzers in Bezug auf jedes von mehreren Benutzergeräten zu bestimmen, die dem Benutzer zugeordnet sind;
ferner zu bestimmen, welche der mehreren Benutzergeräte sich unter den mehreren Benutzergeräten am nächsten zum Benutzer befindet; und
eine Nachrichtenzustellungsmaschine (106), die eine Nachricht an das Benutzergerät bereitstellt, von dem bestimmt wurde, dass es sich am nächsten zum Benutzer befindet, wobei die Nähemaschine ferner dafür ausgelegt ist:
Nähewerte, angegeben durch ein Näheverzeichnis (316), die jedem der dem Benutzer zugeordneten Geräte entsprechen, aus einer Zuweisung zwischen dem Benutzer und jedem der Geräte zu erhalten;
Nähewerte jedes der Geräte iterativ zu vergleichen, um den geringsten Nähewert zu bestimmen; und
eines der Geräte, das dem geringsten Nähewert zugeordnet ist, als das Gerät zu identifizieren, das dem Benutzer am nächsten ist.

2. System nach Anspruch 1, wobei die Nähemaschine (104) in Reaktion auf das Empfangen eines Hinweises auf die Erzeugung der Nachricht die Nähe des Benutzers bestimmen soll.

3. System nach Anspruch 1, wobei das System ferner ein Näheregister umfasst, um Näheinformationen zu empfangen und zu speichern, die die physische Nähe des Benutzers in Bezug auf jedes der mehreren Benutzergeräte anzeigen, wobei die Näheinformationen periodisch erhalten werden.

4. System nach Anspruch 3, wobei die Nähemaschine (104) die Näheinformationen analysieren soll, um das Benutzergerät, das am nächste zum Benutzer ist, zu bestimmen.

5. System nach Anspruch 1, wobei die Nähemaschine (104) die mehreren Benutzervorrichtungen dem Benutzer zuordnen soll, indem sie Benutzergeräte-Identifikationen jedes der mehreren Benutzergeräte einer Benutzeridentifikation des Benutzers zuweist.

6. System nach Anspruch 1, wobei die Nähemaschine (104) dazu dient, Benutzeranmeldeinformationen zur Authentifizierung und Identifizierung des Benutzers zu empfangen.

7. System nach Anspruch 1, wobei die Nachrichtenzustellungsmaschine (106) dazu dient,
einen Kommunikationskanal mit dem Benutzergerät, das am nächsten zum Benutzer ist, aufzubauen; und
die Nachricht über den Kommunikationskanal bereitzustellen.

8. System nach Anspruch 7, wobei der Kommunikationskanal auf einem eXtensible Messaging and Presence Protocol (XMPP) basiert.

9. Nachrichtenübermittlungsverfahren, Folgendes umfassend:
als Reaktion auf das Erhalten einer Nachricht, die einem Benutzer bereitgestellt werden soll, Bestimmen mehrerer Geräte, die als dem Benutzer zugeordnet registriert sind;
Erhalten von Näheinformationen, die für jedes der dem Benutzer zugeordneten Geräte die physische Nähe des Benutzers zum Gerät anzeigen;
auf der Grundlage der Näheinformationen, Identifizieren eines der mehreren zugeordneten Geräte, das sich am nächsten zum Benutzer befindet;
Aufbauen eines Kommunikationskanals mit dem identifizierten Gerät; und
Bereitstellen der erhaltenen Nachricht an das identifizierte Gerät über den Kommunikationskanal, wobei das Identifizieren ferner Folgendes umfasst:
Erhalten von Nähewerten, angegeben durch ein Näheverzeichnis (316), die jedem der dem Benutzer zugeordneten Geräte entsprechen, aus einer Zuweisung zwischen dem Benutzer und jedem der Geräte;
iteratives Vergleichen des Nähewertes jedes der Geräte, um den geringsten Nähewert zu bestimmen; und
Identifizieren eines der Geräte, das dem geringsten Nähewert zugeordnet ist, als das Gerät, das dem Benutzer am nächsten ist.

10. Verfahren nach Anspruch 9, wobei die Nachricht von einem Nachrichtenübermittlungsdienst erhalten wird, wobei die Nachricht auf der Grundlage von Profildaten oder Abonnementdaten, die dem Benutzer zugeordnet sind, erzeugt wird.

11. Verfahren nach Anspruch 9, wobei der Benutzer innerhalb der physischen Nähe des Benutzergeräts auf der Grundlage der Benutzeranmeldeinformationen oder der vom Benutzer erhaltenen biometrischen Eingabe identifiziert wird.

12. Verfahren nach Anspruch 9, wobei die erhaltene Nachricht ausschließlich für das identifizierte Gerät bereitgestellt wird.

13. Nicht-flüchtiges computerlesbares Medium, das Befehle enthält, die durch eine Verarbeitung ausführbar sind, die alle Schritte eines Verfahrens nach Anspruch 9 ausführt.

14. Computerlesbares Medium nach Anspruch 13, wobei die Nähewerte aus einem Näherregister erhalten werden, wobei das Näheregister eine Zuweisung zwischen
den Nähewerten mit einer Geräteidentifikation jedes der mehreren Geräte; und
einer dem Benutzer zugeordneten Benutzeridentifikation umfasst.

## Revendications

1. Système de messagerie (102) comprenant :
un moteur de proximité (104) conçu pour
déterminer la proximité d'un utilisateur par rapport à chaque dispositif utilisateur d'une pluralité de dispositifs utilisateur associés à l'utilisateur ;
déterminer en outre lequel parmi la pluralité de dispositifs utilisateur est le plus proche de l'utilisateur ; et
un moteur de distribution de messages (106) destiné à transmettre un message au dispositif utilisateur déterminé comme étant le plus proche de l'utilisateur, le moteur de proximité étant en outre conçu pour :
obtenir des valeurs de proximité indiquées par un registre de proximité (316), correspondant à chacun des dispositifs associés à l'utilisateur à partir d'un mappage entre l'utilisateur et chacun des dispositifs ;
comparer de manière itérative la valeur de proximité de chacun des dispositifs pour déterminer la plus petite valeur de proximité ; et
identifier l'un des dispositifs associés à la valeur de proximité la plus petite comme étant le dispositif le plus proche de l'utilisateur.

2. Système selon la revendication 1, dans lequel le moteur de proximité (104) est destiné à déterminer la proximité de l'utilisateur, en réponse à la réception d'une indication de la génération du message.

3. Système selon la revendication 1, le système comprenant en outre un registre de proximité destiné à recevoir et stocker des informations de proximité indiquant la proximité physique de l'utilisateur par rapport à chaque dispositif utilisateur de la pluralité de dispositifs utilisateur, les informations de proximité étant obtenues périodiquement.

4. Système selon la revendication 3, dans lequel le moteur de proximité (104) est destiné à analyser les informations de proximité afin de déterminer le dispositif utilisateur le plus proche de l'utilisateur.

5. Système selon la revendication 1, dans lequel le moteur de proximité (104) est destiné à associer la pluralité des dispositifs utilisateur à l'utilisateur en mappant les identifications de dispositifs utilisateur de chaque dispositif utilisateur de la pluralité de dispositifs utilisateur avec une identification utilisateur de l'utilisateur.

6. Système selon la revendication 1, **caractérisé en ce que** le moteur de proximité (104) est destiné à recevoir des informations d'identification utilisateur afin d'authentifier et d'identifier l'utilisateur.

7. Système selon la revendication 1, dans lequel le moteur de distribution de messages (106) est destiné à
établir un canal de communication avec le dispositif utilisateur le plus proche de l'utilisateur ; et
transmettre le message sur le canal de communication.

8. Système selon la revendication 7, **caractérisé en ce que** le canal de communication est basé sur un protocole de messagerie et de présence extensible (XMPP).

9. Procédé de messagerie comprenant :
la détermination d'une pluralité de dispositifs enregistrés comme étant associés à l'utilisateur, en réponse à l'acquisition d'un message à transmettre à un utilisateur ;
l'obtention d'informations de proximité indiquant, pour chacun des dispositifs associés à l'utilisateur, la proximité physique de l'utilisateur par rapport au dispositif ;
l'identification, sur la base des informations de proximité, d'un dispositif parmi la pluralité de dispositifs associés comme étant le dispositif le plus proche de l'utilisateur ;
l'établissement d'un canal de communication avec le dispositif identifié ; et
la transmission du message acquis au dispositif identifié sur le canal de communication, l'identification comprenant en outre :
l'obtention de valeurs de proximité, indiquées par un registre de proximité (316), correspondant à chacun des dispositifs associés à l'utilisateur à partir d'un mappage entre l'utilisateur et chacun des dispositifs ;
la comparaison itérative de la valeur de proximité de chacun des dispositifs afin de déterminer la valeur de proximité la plus petite ; et
l'identification du dispositif associé à la valeur de proximité la plus petite comme étant le dispositif le plus proche de l'utilisateur.

10. Procédé selon la revendication 9, **caractérisé en ce que** le message est acquis à partir d'un service de messagerie, le message étant généré sur la base d'une des données de profil et des données d'abonnement associées à l'utilisateur.

11. Procédé selon la revendication 9, dans lequel l'utilisateur dans la proximité physique du dispositif utilisateur est identifié sur la base de références d'utilisateur et d'une entrée biométrique reçue(s) de l'utilisateur.

12. Procédé selon la revendication 9, dans lequel le message acquis est transmis exclusivement au dispositif identifié.

13. Support non transitoire lisible par ordinateur, comprenant des instructions exécutables par un dispositif de traitement pour réaliser toutes les étapes du procédé selon la revendication 9.

14. Support lisible par ordinateur selon la revendication 13, dans lequel les valeurs de proximité sont obtenues à partir d'un registre de proximité, le registre de proximité comprenant un mappage entre
les valeurs de proximité avec une identification de dispositif de chaque dispositif de la pluralité de dispositifs ; et
une identification utilisateur associée à l'utilisateur.
